# EUROPEAN PATENT SPECIFICATION

(11) **EP 3 354 485 B1**
(45) Date of publication and mention of the grant of the patent: **08.01.2020**
(21) Application number: 17208120.0
(22) Date of filing: 18.12.2017
(51) Int. Cl.: B60C 11/12

(54) **TREAD KERF OF SNOW TIRE**
LAUFFLÄCHENKERBE EINES WINTERREIFENS
ENTAILLE DE LA BANDE DE ROULEMENT D'UN PNEU NEIGE

(30) Priority: 17.01.2017 KR 20170008108
(43) Date of publication of application: 01.08.2018
(73) Proprietor: Hankook Tire Co., Ltd., Seoul 135-723 (KR)
(72) Inventor: Joo, Sang Tak, Daejeon 34219 (KR)
(74) Representative: Petraz, Gilberto Luigi

(56) References cited:
- EP-B1- 2 234 821
- JP-A- 2003 118 322
- US-A1- 2010 084 062

## Description

### BACKGROUND OF THE INVENTION

### Field of the Invention

The present invention relates to a tread kerf of a snow tire and, more particularly, to a tread kerf of a snow tire which easily discharges snow trapped in the kerf.

### Description of the Related Art

In general, a tire is one of parts forming a vehicle and directly contacts a road surface. Air in the tire has a cushioning function in the same manner as a spring and thus absorbs impact caused by unevenness of the road surface and improves ride comfort.

Such a tire includes a tread which is a rubber layer contacting a road surface, side walls connected to the tread and forming the side surfaces of the tire, bead assemblies connected to the side walls and fixed to a rim of a vehicle, a carcass installed within the tire, having high fatigue resistance to bending and stretching of the side walls and forming the body of the tire, and a belt disposed between the tread and the carcass, protecting the carcass and improving rigidity of the surface of the tread. The tread includes blocks and grooves, and kerfs are formed on the surfaces of the blocks so as to properly adjust rigidity of the blocks and thus satisfy required performance of the tire.

A snow tire is referred to as a tire manufactured so as to improve braking performance, steering performance and traction performance, as compared to general tires, when vehicles drive on a snowy road or an icy road in winter. When a vehicle drives on a snowy road or an icy road, the snow tire maintains gripping ability due to edge effects of kerfs during driving, braking and cornering of the vehicle.

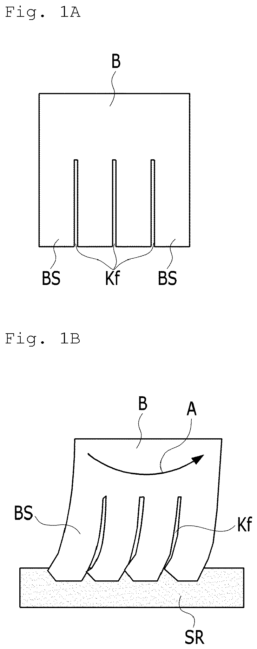

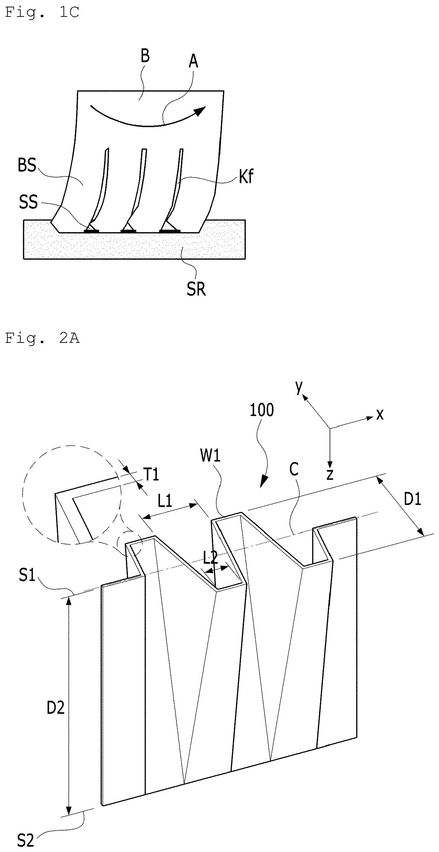

In general, a snow tire or a winter tire includes kerfs (sipes) formed on the surface of a tread and thus improves driving force and braking force on the surface of a snowy road. As exemplarily shown in FIG. 1A, when a tire moves in a direction A, small tread blocks BS divided from a block B by kerfs Kf are collapsed at a designated degree on a snowy road SR (FIG. 1B). Then, shearing force between compressed snow in small spaces SS formed between the small tread blocks BS occurs (in FIG. 1C).

When the tire is rotated on the snowy road SR, the kerfs Kf are filled with snow and, in this case, cohesion effects generated by scrapping of compressed snow by the kerfs Kf are reduced. Therefore, it is necessary to discharge snow trapped in the kerfs.

Korean Patent Registration No. 10-1287507 filed by the applicant of the present invention discloses a snow tire having improved snow discharge effects. A heavy duty pneumatic snow tire disclosed in Korean Patent Registration No. 10-1287507 is configured such that, when a vehicle drives on a snowy road, snow trapped in blocks of a tread contacting snow on a road surface is rapidly discharged through a discharging function after contact with the road surface so as to have improved snowy road driving performance, snow discharge recesses are formed on the blocks, disposed between grooves, at the same interval in the circumferential direction of the tire, and compressed air paths are formed through a block surface and extend at an angle of inclination to the bottom of the snow discharge recess. Documents JP 2003 118322 A, EP 2 234 821 B1, US 2010/084062 A1 disclose sipe designs similar to that of the present application.

### PRIOR ART DOCUMENT

### PATENT DOCUMENT

Korean Patent Registration No. 10-1287507 (Registration Date: July 12, 2013)
Korean Patent Laid-Open Publication No. 2016-0022057 (Publication Date: February 29, 2016)

### SUMMARY OF THE INVENTION

Therefore, the present invention has been made in view of difficulty in discharging snow from a tire having kerfs formed between grooves without formation of snow discharge recesses and compressed air paths between the grooves, and it is an object of the present invention to provide a tread kerf of a snow tire which easily discharges snow trapped in the kerf.

In accordance with an aspect of the present invention, the above and other objects can be accomplished by a tread for a snow tire comprising the features of claim 1.

The amplitude of the trapezoidal wave structure may be equal up to a designated depth from the tire surface and be gradually decreased in a direction from the designated depth from the tire surface to the tire base.

The tread kerf having the trapezoidal wave structure may have a thickness of 0.4 to 2 mm, the amplitude of the trapezoidal wave structure on the tire surface may be 2 to 20 mm and the amplitude of the trapezoidal wave structure on the tire base may be 0 mm.

The tread kerf having the trapezoidal wave structure may have a depth of 3 to 10 mm.

### BRIEF DESCRIPTION OF THE DRAWINGS

The above and other objects, features and other advantages of the present invention will be more clearly understood from the following detailed description taken in conjunction with the accompanying drawings, in which:
FIGs. 1A to 1C are reference views illustrating small tread blocks into which a tire block is divided by kerfs, and behavior of the tread blocks on a snowy road;
FIGs. 2A and 2B are perspective and side views of a tread kerf of a snow tire in accordance with the exemplary treads known from the prior art.
FIG. 3 is a perspective view illustrating effects of the tread kerf of FIGs. 2A and 2B;
FIGs. 4A to 4C are views illustrating snow discharge behaviors at three positions of FIG. 3;
FIG. 5 is a view illustrating a snow discharge behavior of a conventional tread kerf of a snow tire;
FIGs. 6A and 6B are perspective and side views of a tread kerf of a snow tire in accordance with the exemplary treads known from the prior art. and
FIGs. 7A and 7B are perspective and side views of a tread kerf of a snow tire in accordance with the present invention.

### DETAILED DESCRIPTION OF THE INVENTION

Reference will now be made in detail to the preferred embodiments of the present invention, examples of which are illustrated in the accompanying drawings. In the drawings, the same or similar elements are denoted by the same reference numerals even though they are depicted in different drawings. In the following description of the present invention, a detailed description of known functions and configurations incorporated herein will be omitted when it may make the subject matter of the present invention rather unclear. In the drawings, some elements may be exaggerated, omitted or schematically illustrated, for convenience of description.

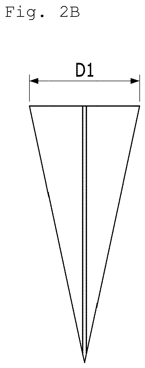

FIGs. 2A and 2B are perspective and side views of a tread kerf 100 of a snow tire in accordance with the exemplary treads known from the prior art. As exemplarily shown in FIGs. 2A and 2B, the tread kerf 100 in accordance with one embodiment of the present invention is formed on the outer surface of a block of a tread of a snow tire so as to have a trapezoidal wave structure W1 extending along the surface (i.e., the x-y plane) and formed in a depth direction (i.e., the z-axis direction) of the block.

The trapezoidal wave structure W1 has a gear teeth-type cross-section such that an inlet distance L1 of the trapezoidal wave structure W1 is greater than a bottom distance L2 of the trapezoidal wave structure W1, and bottoms of unit waves of the trapezoidal wave structure W1 are located at the same distance from a central line C. Further, an amplitude of the trapezoidal wave structure W1 is gradually decreased in a direction from a tire surface S1 to a tire base S2. The amplitude of the trapezoidal wave structure W1 on the tire surface S1 may be 2 to 20 mm, and the amplitude of the trapezoidal wave structure W1 on the tire base S2 may be 0 mm.

A thickness T1 of the kerf 100 having the trapezoidal wave structure W1 may be 0.4 to 2 mm, and a depth D2 of the kerf 100 having the trapezoidal wave structure W1 may be 3 to 10 mm. The thickness T1 of the kerf refers a gap width.

In FIG. 2, the inside of the trapezoidal wave structure W1 is a vacant space, i.e., the inside of the kerf 100, and the outside of the trapezoidal wave structure W1 is a filled part, i.e., the block of the snow tire.

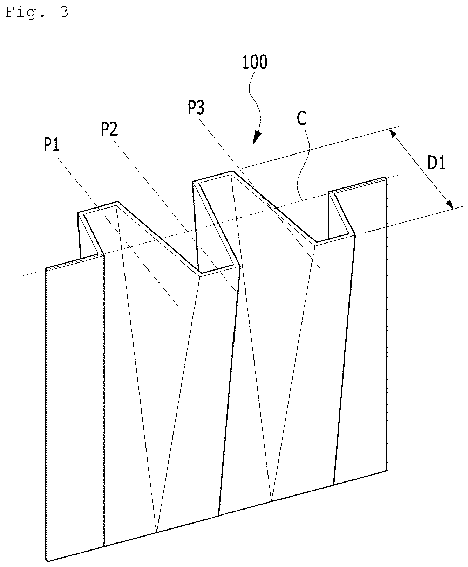

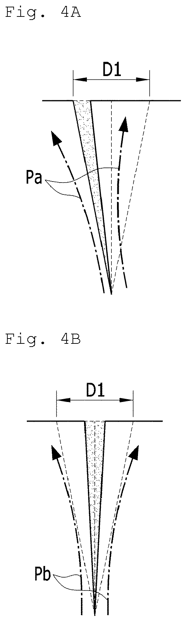

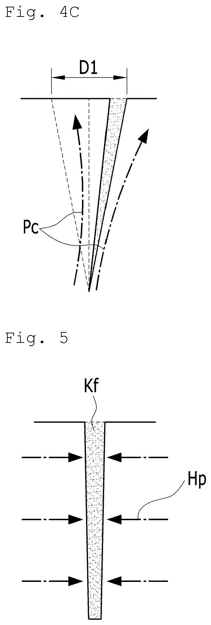

FIGs. 4A to 4C illustrate snow discharge behaviors at a first position P1, a second position P2 and a third position P3 of the tread kerf in accordance with the exemplary treads known from the prior art shown in FIG. 3. FIG. 4A illustrates a snow discharge behavior at the first position P1, FIG. 4B illustrates a snow discharge behavior at the second position P2, and FIG. 4C illustrates a snow discharge behavior at the first position P3.

As exemplarily shown in FIGs. 1B and 1C, when the tire is rotated on a snowy road, the small tread blocks BS are collapsed, and shearing force between compressed snow in the small spaces SS formed between the small tread blocks BS occurs. As exemplarily shown in FIGs. 4A to 4C, the block is restored to its original shape by force in directions shown by arrows Pa, Pb and Pc from the tire base S2 (in FIG. 2A) and may thus easily discharge snow trapped in the kerf to the outside of the tread.

On the other hand, a conventional tread kerf of a snow tire shown in FIG. 5 just compresses snow filling the kerf by compressing force in a lateral direction shown by arrows Hp but scarcely discharges snow to the outside of the tread, thus having difficulty in discharging snow to the outside.

The tread kerf of the present invention may have various shapes and thus adjust rigidity change.

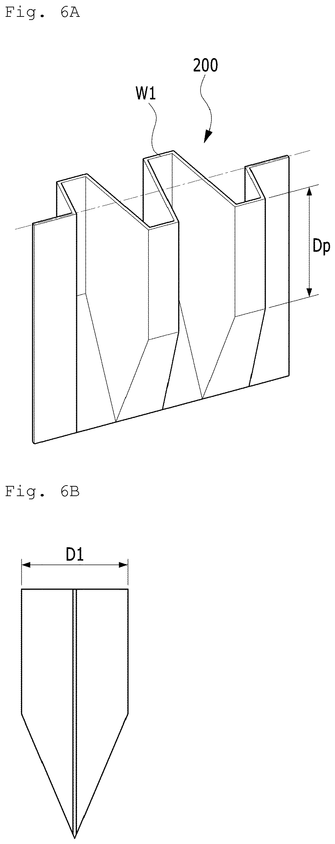

FIGs. 6A and 6B are perspective and side views of a tread kerf 200 of a snow tire in accordance with prior art. In this example, an amplitude of a trapezoidal wave structure W1 of the tread kerf 200 is equal up to a designated depth Dp from a tire surface and is gradually decreased in a direction from the designated depth Dp from the tire surface to a tire base.

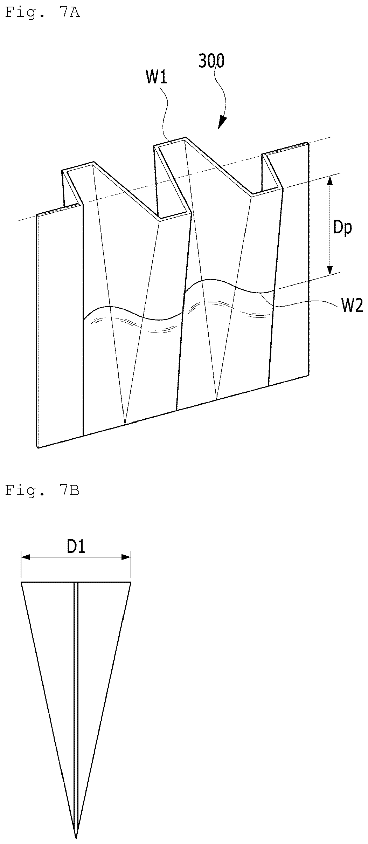

FIGs. 7A and 7B are perspective and side views of a tread kerf 300 of a snow tire in accordance with the present invention. The tread kerf 300 in accordance with the present invention has a trapezoidal wave structure W1 to a designated depth Dp from a tire surface and then the trapezoidal wave structure W1 is changed to a sinusoidal wave structure W2 in a section from the designated depth Dp to a tire base, and an amplitude of the tread kerf 300 is gradually decreased in a direction from the tire surface to the tire base.

Other elements of the tread kerf 200 shown in FIGs. 6A and 6B and the tread kerf 300 shown in FIGs. 7A and 7B are the same as or similar to those of tread kerf 100 shown in FIGs. 2A and 2B and a detailed description thereof will thus be omitted.

As apparent from the above description, a tread kerf of a snow tire in accordance with the present invention has an amplitude which is gradually decreased in a direction from a tire surface to a tire base and may thus easily discharge snow trapped in the kerf to the outside of a tire block through the tire surface, even if a small space formed by the kerf is filled with snow when the tire is rotated on a snowy road.

## Claims

1. A tread for a snow tire comprising a kerf (100, 200, 300) formed on an outer surface of a block of the tread of the snow tire and having a trapezoidal wave structure (W1) extending along the surface and formed in a depth direction of the block,
wherein an amplitude of the trapezoidal wave structure(W1) is gradually decreased in a direction from a tire surface to a tire base,
**characterised in that**, the trapezoidal wave structure (W1) is changed to a sinusoidal wave structure(W2) in a section from a designated depth (Dp) from the tire surface to the tire base, and an amplitude of the sinusoidal wave structure is gradually decreased in a direction from the tire surface to the tire base.

2. The tread for a snow tire according to claim 1, wherein the amplitude of the trapezoidal wave structure (W1) is equal up to a designated depth (Dp) from the tire surface and is gradually decreased in a direction from the designated depth (Dp) from the tire surface to the tire base.

3. The tread for a snow tire according to claim 2, wherein the kerf having the trapezoidal wave structure (W1) has a thickness (T1) of 0.4 to 2 mm.

4. The tread for a snow tire according to claim 1, wherein the amplitude of the trapezoidal wave structure (W1) on the tire surface is 2 to 20 mm, and the amplitude of the trapezoidal wave structure on the tire base is 0 mm.

5. The tread for a snow tire according to claim 1, wherein the kerf (100, 200, 400) having the trapezoidal wave structure (W1) has a depth (D2) of 3 to 10 mm.

## Patentansprüche

1. Reifenprofil für einen Winterreifen umfassend eine Kerbe (100, 200, 300), die auf einer äußeren Oberfläche eines Blocks des Reifenprofils des Winterreifens ausgeformt ist und eine trapezförmige Wellenstruktur (W1) umfasst, die sich über die Oberfläche erstreckt und in einer Tiefenrichtung des Blocks ausgeformt ist,
wobei eine Amplitude der trapezförmigen Wellenstruktur (W1) allmählich in eine Richtung von einer Reifenoberfläche zu einer Reifenbasis abnimmt,
**dadurch gekennzeichnet, dass**
sich die trapezförmige Wellenstruktur (W1) in einem Abschnitt von einer vorbestimmten Tiefe (Dp) von der Reifenoberfläche zur Reifenbasis in eine sinusförmige Wellenstruktur (W2) verändert, und eine Amplitude der sinusförmigen Wellenstruktur allmählich in einer Richtung von der Reifenoberfläche zur Reifenbasis abnimmt.

2. Reifenprofil für einen Winterreifen nach Anspruch 1, wobei die Amplitude der trapezförmigen Wellenstruktur (W1) bis zu einer vorbestimmten Tiefe (Dp) von der Reifenoberfläche gleich ist und allmählich in einer Richtung von der vorbestimmten Tiefe (Dp) von der Reifenoberfläche zur Reifenbasis abnimmt.

3. Reifenprofil für einen Winterreifen nach Anspruch 2, wobei die Kerbe, die die trapezförmige Wellenstruktur (W1) aufweist, eine Dicke (T1) von 0,4 bis 2 mm aufweist.

4. Reifenprofil für einen Winterreifen nach Anspruch 1, wobei die Amplitude der trapezförmigen Wellenstruktur (W1) an der Reifenoberfläche 2 bis 20 mm aufweist, und die Amplitude der trapezförmigen Wellenstruktur an der Reifenbasis 0 mm beträgt.

5. Reifenprofil für einen Winterreifen nach Anspruch 1, wobei die Kerbe (100, 200, 400) mit der trapezförmigen Wellenstruktur (W1) eine Tiefe (D2) von 3 bis 10 mm aufweist.

## Revendications

1. Bande de roulement pour pneu neige comprenant une saignée (100, 200, 300) formée sur une surface extérieure d'un bloc de la bande de roulement du pneu neige et ayant une structure en ondes trapézoïdales (W1) s'étendant le long de la surface et formée dans une direction de profondeur du bloc,
dans laquelle une amplitude de la structure en ondes trapézoïdales (W1) est progressivement diminuée dans une direction allant d'une surface de pneu à une base de pneu,
**caractérisée en ce que**
la structure en ondes trapézoïdales (W1) est remplacée par une structure en ondes sinusoïdales (W2) dans une section d'une profondeur désignée (Dp) de la surface de pneu à la base de pneu, et une amplitude de la structure en ondes sinusoïdales est progressivement diminuée dans une direction allant de la surface de pneu à la base de pneu.

2. Bande de roulement pour pneu neige selon la revendication 1, dans laquelle l'amplitude de la structure en ondes trapézoïdales (W1) est égale à une profondeur désignée (Dp) à partir de la surface de pneu et est diminuée progressivement dans une direction à partir de la profondeur désignée (Dp) allant de la surface de pneu à la base de pneu.

3. Bande de roulement pour pneu neige selon la revendication 2, dans laquelle la saignée ayant la structure en ondes trapézoïdales (W1) a une épaisseur (T1) de 0,4 à 2 mm.

4. Bande de roulement pour pneu neige selon la revendication 1, dans laquelle l'amplitude de la structure en ondes trapézoïdales (W1) sur la surface de pneu est comprise entre 2 et 20 mm, et l'amplitude de la structure en ondes trapézoïdales sur la base de pneu est égale à 0 mm.

5. Bande de roulement pour pneu neige selon la revendication 1, dans laquelle la saignée (100, 200, 400) ayant la structure en ondes trapézoïdales (W1) a une profondeur (D2) de 3 à 10 mm.
